# EUROPEAN PATENT APPLICATION

(11) **EP 3 505 909 A1**
(43) Date of publication of application: **03.07.2019**
(21) Application number: 18215448.4
(22) Date of filing: 21.12.2018
(51) Int. Cl.: G01N 21/01, G01N 21/65, G01J 3/44, B01L 9/00, G01N 21/03

(54) **RAMAN-ENHANCED SUBSTRATE FIXING DEVICE AND RAMAN-ENHANCED DETECTING SYSTEM**

(30) Priority: 29.12.2017 CN 201711466759
(71) Applicant: Nuctech Company Limited, TongFang Building, Shuangqinglu, Haidian District Beijing 100084 (CN)
(72) Inventor: ZHANG, Jianhong, Beijing, Beijing 100084 (CN); ZHANG, Shixin, Beijing, Beijing 100084 (CN); JIANG, Lichao, Beijing, Beijing 100084 (CN); CHEN, Zhuo, Beijing, Beijing 100084 (CN); WANG, Hongqiu, Beijing, Beijing 100084 (CN)
(74) Representative: Held, Stephan

(57) **Abstract**

The present invention relates to a Raman-enhanced substrate fixing device and a Raman-enhanced detecting system, the Raman-enhanced substrate fixing device comprises a fixing base, wherein the fixing base is provided with a substrate receiving portion and a probe connecting portion, the substrate receiving portion is used for receiving a Raman-enhanced substrate, the probe connecting portion is used for connection with a probe of a Raman spectrometer, and the probe connecting portion and the substrate receiving portion are disposed such that light emitted by the probe is capable of being irradiated onto the Raman-enhanced substrate.

## Description

### 1 TECHNICAL FIELD

The present disclosure relates to the field of Raman-enhanced detection technology, in particular to a Raman-enhanced substrate fixing device and a Raman-enhanced detecting system.

### 2 Background

Surface-enhanced Raman scattering indicates that when some molecules are adsorbed on the surface of certain metals (such as gold, silver or copper, etc.), the Raman heat dissipation signals of the molecules are greatly enhanced, thereby solving the problems of low intensity and low efficiency of ordinary Raman scattering signals. The spectral detection technology based on the surface-enhanced Raman scattering has been widely used in various fields such as optics, catalysis, detection and biomedicine.

The Raman-enhanced substrate is one of the determinants affecting the surface-enhanced Raman scattering effect. In the related art, the Raman-enhanced substrate is generally only used for laboratory detection, and is difficult to use in conjunction with a portable or hand-held Raman spectrometer for on-site detection. Also, when used in a laboratory, the Raman-enhanced substrate is often positioned and detected by a microscope. The use of the microscope for fixing the Raman-enhanced substrate has the following three main problems:
(1) The microscope must be operated in the laboratory for a large Raman instrument therein. The microscope is a high-precision device that cannot be moved at will and is not portable, and is not suitable for fixing samples on site or quickly.
(2) The microscope requires a professional chemical experimenter to perform precise focusing (determine the position of the Z axis), determine accurate positions (the positions of the X axis and the Y axis), fix an enhanced substrate, etc. It has technical requirements for operators and is relatively complicated to use.
(3) The microscope is relatively high in operation price, requires professional training and operation guidance, and is a high-cost and low-speed enhanced substrate fixing device that is only suitable for fixing positions in the laboratory.

### 3 Summary

One technical problem to be solved by the present disclosure is: the Raman-enhanced substrate in the related art is usually fixed by a microscope, which hardly meets the requirements of on-site detection.

In order to solve the above technical problem, an aspect of the present disclosure provides a Raman-enhanced substrate fixing device, including a fixing base, wherein the fixing base is provided with a substrate receiving portion and a probe connecting portion, the substrate receiving portion for receiving a Raman-enhanced substrate, the probe connecting portion for connection with a probe of a Raman spectrometer, and the probe connecting portion and the substrate receiving portion are disposed such that light emitted by the probe is being irradiated onto the Raman-enhanced substrate.

In some embodiments, the substrate receiving portion includes a groove that allows the Raman-enhanced substrate to be inserted into; and/or the probe connecting portion includes a connecting hole that allows the probe to be inserted into.

In some embodiments, the substrate receiving portion includes a groove, the probe connecting portion includes a connecting hole, and the connecting hole communicates with the groove.

In some embodiments, the probe connecting portion further includes a probe fastener that fastens the probe along a radial direction of the connecting hole.

In some embodiments, the probe connecting portion and the substrate receiving portion are disposed such that a center of the probe is aligned with a center of the Raman-enhanced substrate.

In some embodiments, the Raman-enhanced substrate fixing device further includes a sealing member provided at the probe connecting portion.

In some embodiments, the Raman-enhanced substrate fixing device further includes an anti-slip member for preventing the Raman-enhanced substrate from slipping when entering the substrate receiving portion.

In some embodiments, the anti-slip member is detachably connected to the fixing base.

In some embodiments, the anti-slip member includes an anti-slip rubber sheet.

In some embodiments, the fixing base includes a first base and a second base, the first base is detachably connected with the second base, the substrate receiving portion is disposed on one side of at least one of the first base and the second base adjacent to the other of the first base and the second base, and the probe connecting portion is disposed on the first base.

In some embodiments, the substrate receiving portion is disposed on the first base.

In some embodiments, the substrate receiving portion is disposed on one of the first base and the second base, the anti-slip member of the Raman-enhanced substrate fixing device is disposed on the other of the first base and the second base, and the anti-slip member is located between the first base and the second base and disposed opposite to the substrate receiving portion.

Another aspect of the present disclosure further provides a Raman-enhanced detecting system including a Raman spectrometer and the Raman-enhanced substrate fixing device of the present disclosure, the probe connecting portion being connected with the probe of the Raman spectrometer.

The present disclosure provides a special Raman-enhanced substrate fixing device besides the microscope, so that the Raman-enhanced substrate is no longer limited to laboratory detection, but can also be applied to on-site detection, and can flexibly meet the requirements of on-site detection.

Other features of the present disclosure and the advantages thereof will become apparent through the following detailed descriptions of exemplary embodiments of the present disclosure with reference to the accompanying drawings.

### 4 Brief description of the drawings

In order to describe the technical solutions in the embodiments of the present disclosure or in the related art more clearly, the accompanying drawings required for describing the embodiments or the related art are briefly introduced below. Apparently, the accompanying drawings in the following description show only some embodiments of the present disclosure, and a person of ordinary skill in the art may still derive other drawings from these accompanying drawings without creative efforts.

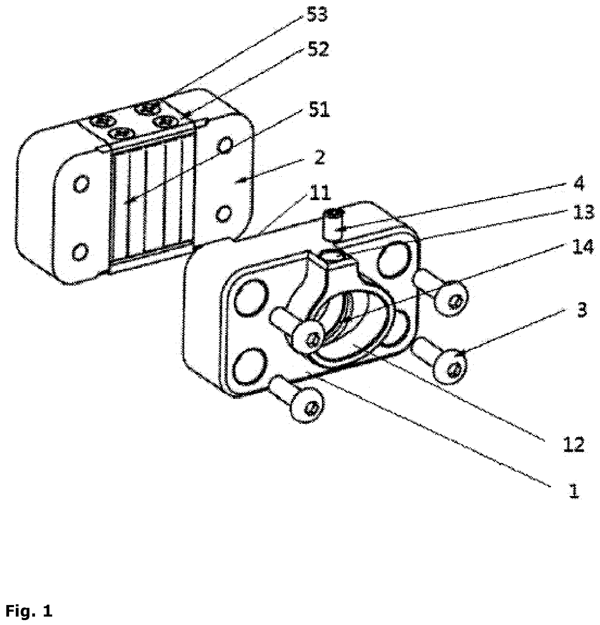

FIG. 1 is a structure diagram of a Raman-enhanced substrate fixing device according to some embodiments of the present disclosure.

### Reference signs:

1, first base; 11, groove; 12, connecting hole; 13, jackscrew matching hole; 14, sealing ring;
2, second base;
3, connecting screw;
4, jackscrew;
51, anti-slip rubber sheet; 52, pressure plate; 53, fixing screw.

### 5 Detailed description

A clear and complete description will be made to the technical solutions in the embodiments of the present disclosure below in combination with the accompanying drawing in the embodiments of the present disclosure. Apparently, the embodiments described are only part of the embodiments of the present disclosure, not all of them. The following description of at least one exemplary embodiment is actually only illustrative, and severs by no means as any limitation to the present disclosure and an application or usage thereof. All other embodiments obtained by those of ordinary skill in the art based on the embodiments of the present disclosure without creative efforts shall fall within the protection scope of the present disclosure.

Technologies, methods and devices known by those of ordinary skills in related arts may not be discussed in detail, but in appropriate situations, the technologies, methods and devices should be regarded as part of the specification.

In the description of the present disclosure, it should be understood that the orientation or position relationships indicated by the terms "front, back, upper, lower, left, right", "transverse, longitudinal, vertical, horizontal", "top, bottom" and the like are generally based on the orientation or position relationships shown in the drawing. The terms are only for description convenience of the present disclosure and simplification of the description, but do not indicate or imply that the denoted devices or units must have specific orientations or be constructed and operated in specific orientations unless otherwise specified. Therefore, the terms should not be understood to limit the scope of the present disclosure. The terms "inner, outer" indicate inner and outer relative to the contour of each component itself.

In the description of the present disclosure, it should be understood that the terms "first", "second" and the like are used to define a component only for the purpose of facilitating the distinction between the corresponding components, and if not otherwise stated, the terms do not have any special meaning and therefore cannot be construed as limiting the scope of the present disclosure.

FIG. 1 shows some embodiments of the present disclosure. Referring to FIG. 1, a Raman-enhanced substrate fixing device provided by the present disclosure includes a fixing base, the fixing base is provided with a substrate receiving portion and a probe connecting portion, the substrate receiving portion is used for receiving a Raman-enhanced substrate, the probe connecting portion is used for connection with a probe of a Raman spectrometer, and the probe connecting portion and the substrate receiving portion are disposed such that the light emitted by the probe is capable of being irradiated onto the Raman-enhanced substrate.

The Raman-enhanced substrate fixing device of the present disclosure is a device different from a microscope and special for fixing a Raman-enhanced substrate. It can conveniently realize the fixing of the Raman-enhanced substrate by using the substrate receiving portion, and can conveniently realize the detection of the Raman-enhanced substrate by the Raman spectrometer through the cooperation of the substrate receiving portion and the probe connecting portion, so that the Raman-enhanced substrate is no longer limited to laboratory detection, but can also be applied to on-site detection, which is beneficial to expanding the application range of the Raman-enhanced substrate, and enables the spectral detection method based on surface-enhanced Raman scattering to be more flexible and diverse.

Moreover, compared with the use of a microscope for fixing, the use of the Raman-enhanced substrate fixing device of the present disclosure to fix the Raman-enhanced substrate has the advantages that the fixing steps are few, the fixing efficiency is high, precise focusing is not required during detection, and the detecting operation is simple and convenient, which is conducive to saving equipment costs and labor costs, saving time and cost and facilitating quick on-site detection, can also reduce the technical requirements for operators and avoid long-term training on the operators, and is also conducive to reducing the risk of large detection errors due to the lack of technical skills of the operators.

In order to further simplify the detecting operation, in the present disclosure, the probe connecting portion and the substrate receiving portion are also disposed such that the center of the probe is aligned with the center of the Raman-enhanced substrate. Based on this, the Raman-enhanced substrate is directly put into the substrate receiving portion, and the probe is connected with the probe connecting portion together, so that the center of the probe is aligned with the center of the Raman-enhanced substrate to achieve a better Raman detection effect. Since the centers of the probe and the Raman-enhanced substrate are not aligned with each other by manual repetitive adjustment, the detecting operation can be further simplified, and the detecting efficiency can be improved.

For further convenience, the Raman-enhanced substrate is put into the substrate receiving portion. In the present disclosure, the Raman-enhanced substrate fixing device may further include a anti-slip member for preventing the Raman-enhanced substrate from slipping when entering the substrate receiving portion. By using the anti-slip member to prevent the Raman-enhanced substrate from slipping when entering the substrate receiving portion, the Raman-enhanced substrate can enter the substrate receiving portion more smoothly, so that the difficulty in mounting the Raman-enhanced substrate is further reduced, and the mounting efficiency of the Raman-enhanced substrate is improved. The anti-slip member is preferably detachably connected to the fixing base to facilitate the replacement of the anti-slip member.

In addition, the Raman-enhanced substrate fixing device of the present disclosure may further include a sealing member provided at the probe connecting portion. By providing the sealing member, the probe and the Raman-enhanced substrate fixing device can be sealed to prevent light leakage, thereby improving the utilization of light and improving the detecting effect.

In the present disclosure, the substrate receiving portion may include a groove 11 configured to allow the Raman-enhanced substrate to be inserted into. The Raman-enhanced substrate can be mounted on the Raman-enhanced substrate fixing device only by inserting the Raman-enhanced substrate into the groove 11, so the operation is simple and convenient, and the efficiency is high.

The probe connecting portion of the present disclosure may include a connecting hole 12 that allows the probe to be inserted into. The connecting hole 12 may be a threaded hole, so that the probe is in threaded connection with the probe connecting portion to realize the fixing of the probe on the Raman-enhanced substrate fixing device; or the connecting hole 12 may be a unthreaded hole and the probe is fastened in the connecting hole 12 by a probe fastener, in this way, the probe is not required to be provided with threads as compared with the case that the connecting hole 12 and the probe are in direct threaded connection, so a change in the structure of the probe can be avoided. The probe fastener can fasten the probe in the radial direction of the connecting hole 12, which is convenient for operation and is also convenient for achieving a more reliable fastening effect.

When the substrate receiving portion includes the groove 11 and the probe connecting portion includes the connecting hole 12, the groove 11 and the connecting hole 12 may be disposed to communicate with each other, so that the light emitted by the probe is irradiated onto the Raman-enhanced substrate.

In the present disclosure, the fixing base may be of an integral structure or a split structure. For example, the fixing base may be configured to include a first base 1 and a second base 2, and the first base 1 is detachably connected to the second base 2. The configuration of the fixing base including a first base 1 and a second base 2 detachably connected to each other has the advantages that the first base 1 and the second base 2 can be respectively replaced and maintained according to actual conditions, the maintenance cost can be saved, and the anti-slip member can be conveniently mounted and replaced when the Raman-enhanced substrate fixing device includes the anti-slip member.

When the fixing base includes the first base 1 and the second base 2 detachably connected to each other, the substrate receiving portion may be disposed on one side of at least one of the first base 1 and the second base 2 adjacent to the other of the first base 1 and the second base 2, and the probe connecting portion is disposed on the first base 1. In order to simplify the structure, the substrate receiving portion may be disposed only on one of the first base 1 and the second base 2. In addition, the substrate receiving portion is preferably disposed on the first base 1, such that the substrate receiving portion and the probe connecting portion are both disposed on the first base 1 to facilitate the irradiation of the light emitted by the probe onto the Raman-enhanced substrate and achieve the purpose of detection by the cooperation of the Raman-enhanced substrate and the probe. Moreover, when the substrate receiving portion is disposed only on one of the first base 1 and the second base 2 and the Raman-enhanced substrate fixing device further includes a anti-slip member, the anti-slip member is preferably disposed on the other of the first base 1 and the second base 2, and the anti-slip member is located between the first base 1 and the second base 2 and disposed opposite to the substrate receiving portion, because on the one hand, the anti-slip member can more fully achieve a anti-slip effect to more effectively prevent the Raman-enhanced substrate from slipping when entering the substrate fixing portion, and on the other hand, the anti-slip member does not block the Raman-enhanced substrate at all, which is more beneficial to fully irradiating the light emitted by the probe onto the Raman-enhanced substrate.

The present disclosure will be further described in combination with the embodiment shown in FIG. 1.

As shown in FIG. 1, in this embodiment, the Raman-enhanced substrate fixing device includes a fixing base, a jackscrew 4, connecting screws 3, a anti-slip rubber sheet 51, a pressure plate 52 and fixing screws 53. The fixing base includes a first base 1 and a second base 2, wherein the first base 1 is detachably connected with the second base 2 by the connecting screws 3; the first base 1 is provided with a groove 11, a connecting hole 12 and a jackscrew matching hole 13 matching the jackscrew 4; and the anti-slip rubber sheet 51 is detachably mounted on the second base 2 by the pressure plate 52 and the fixing screws 53.

The groove 11 is used as a substrate receiving portion for receiving a Raman-enhanced substrate (specifically, a sheet or a Raman-enhanced base plate). It can be seen from FIG. 1 that, in this embodiment, the first base 1 and the second base 2 are in a block shape, and the groove 11 is disposed on a surface of the first base 1 adjacent to the second base 2 (the left surface of the first base 1 in FIG. 1). In this way, the groove 11 is located between the first base 1 and the second base 2, the opening on a side of the groove 11 facing the second base 2 is closed by the second base 2, so that the Raman-enhanced substrate can be stably retained in the groove 11 after being inserted into the groove 11, and therefore, the Raman-enhanced substrate is fixed more effectively.

The connecting hole 12, the jackscrew matching hole 13 and the jackscrew 4 are used as a probe connecting portion for connection with a probe of a Raman spectrometer to realize the fixing of the probe on the Raman-enhanced substrate fixing device. It can be seen from FIG. 1 that the connecting hole 12 is disposed on the first base 1 and extends towards the groove 11 from the surface of the first base 1 away from the second base 2 (the right surface of the first base 1 in FIG. 1) till communicating with the groove 11. In this way, the probe can be inserted into the connecting hole 12, and the light emitted by the probe can be irradiated onto the Raman-enhanced substrate inserted into the groove 11. The jackscrew matching hole 13 matches the jackscrew 4, and the central axis of the jackscrew matching hole 13 is perpendicular to the central axis of the connecting hole 12, so that the jackscrew 4 serving as a probe fastener can be inserted into the connecting hole 12 along the radial direction of the connecting hole 12 to fix the probe. In use, the probe can be inserted into the connecting hole 12 first, and then the jackscrew 4 is screwed into the jackscrew matching hole 13 till compressing on the probe tightly to achieve the fixing of the probe in the connecting hole 12.

The center of the connecting hole 12 can be aligned with the center of the bottom of the groove 11 (i.e., the wall on a side of the groove 11 facing the second base 2) to realize the alignment of the Raman-enhanced substrate and the center of the probe more conveniently, thereby reducing manual alignment and improving the user experience.

In addition, it can be seen from FIG. 1 that, in this embodiment, a sealing ring 14 is further provided at the junction of the connecting hole 12 and the groove 11. The sealing ring 14 is used as a sealing member for sealing the probe and the Raman-enhanced substrate fixing device, which can effectively prevent light leakage, improve the utilization of light and reduce light waste.

The anti-slip rubber sheet 51 is used as a anti-slip member for preventing the Raman-enhanced substrate from slipping during the insertion into the groove 11. It can be seen from FIG. 1 that, in this embodiment, the anti-slip rubber sheet 51 is disposed on a surface of the second base 2 adjacent to the first base 1 (on the right surface of the second base 2 in FIG. 1), and in this way, the anti-slip rubber sheet 51 is also located between the first base 1 and the second base 2; and the position of the anti-slip rubber sheet 51 on the right surface of the second base 2 corresponds to the position of the groove 11 on the left surface of the first base 1, so that the anti-slip rubber sheet 51 is disposed opposite to the groove 11. This arrangement not only facilitates the mounting of the anti-slip rubber sheet 51, but also facilitates that the anti-slip rubber sheet 51 more fully prevents the Raman-enhancing substrate from slipping during the insertion of the Raman-enhanced substrate into the groove 11.

Specifically, as shown in FIG. 1, in this embodiment, the upper and lower ends of the anti-slip rubber sheet 51 are pressed against the top and bottom surfaces of the second base 2 by the pressure plate 52, and the pressure plate 52 are fixed by the fixing screws 53. Thus, the anti-slip rubber sheet 51 is detachably connected to the second base 2 to facilitate the replacement of the quick-wearing anti-slip rubber sheet 51. It is not difficult to understand that the detachable rubber sheet 51 can also be detachably connected to the second base 2 by other ways such as gluing in addition to the use of the pressure plate 52 and the fixing screws 53.

The anti-slip rubber sheet 51 of this embodiment can be made of imported black rubber to achieve better anti-slip effect, higher wear resistance and longer service life up to 5 years without excessive maintenance.

In other embodiments not shown, the anti-slip rubber sheet 51 may be directly disposed in the groove 11, or the groove 11 may be interchanged with the anti-slip rubber sheet 51 in position, that is, the groove 11 is disposed on the second base 2 and the anti-slip rubber sheet 51 is disposed on the first base 1, and communication between the connecting hole 12 and the groove 11 can be achieved in the two cases by other means such as forming a hole in the anti-slip rubber sheet 51, but the arrangement that the groove 11 is disposed on the first base 1 and the anti-slip rubber sheet 51 is disposed on the second base 2 opposite to the groove 11 in this embodiment has the advantages: on the one hand, the groove 11 and the connecting hole 12 are both disposed on the first base 1, and the groove 11 can communicate with the connecting hole 12 without forming a hole in the anti-slip rubber sheet 51, so the structure is simpler, the groove 11 communicates with the connecting hole 12 more easily, the light emitted by the probe is more easily irradiated onto the Raman-enhanced substrate, and the anti-slip rubber sheet 51 with larger anti-slip area has a better anti-slip effect; and on the other hand, since the anti-slip rubber sheet 51 is not disposed together with the groove 11 on the first base 1, but disposed on the second base 2 opposite to the groove 11, the anti-slip rubber sheet 51 does not block the communication between the groove 11 and the connecting hole 12 at all, and the light emitted by the probe is more directly and fully irradiated onto the entire Raman-enhanced substrate received in the groove 11 to implement a more efficient detection process and achieve a better detection effect.

In addition, in order to facilitate the mounting of the anti-slip rubber sheet 51 on the second base 2, as shown in FIG. 1, the second base 2 is further provided with a mounting groove for receiving the anti-slip rubber sheet 51 in this embodiment, which not only facilitates more secure mounting of the anti-slip rubber sheet 51 on the second base 2, but also ensures the overall flatness of the surface of the second base 2 adjacent to the first base 1, and further facilitates the insertion of the Raman-enhanced substrate. Of course, in other embodiments, the anti-slip rubber sheet 51 may be directly disposed on the surface of the second base 2 without providing a mounting groove.

The assembly and use process of the Raman-enhanced substrate fixing device of this embodiment can be as follows:
(1) Mount the anti-slip rubber sheet 51 to the second base 2. Put the anti-slip rubber sheet 51 into the mounting groove of the second base 2, then press the anti-slip rubber sheet 51 with the pressure plate 52, and fix the pressure plate 52 onto the second base 2 with the fixing screws 53.
(2) Connect the first base 1 with the second base 2. Connect the first base 1 with the second base 2 together with the connecting screws 3 to prevent relative movement therebetween.
(3) During testing, insert the Raman-enhanced substrate into the groove 11 along the anti-slip rubber sheet 51 between the first base 1 and the second base 2, insert the probe into the connecting hole 12 to ensure that the center of the probe is aligned with the center of the Raman-enhanced substrate, and then screw the jackscrew 4 to accomplish the fixing of the Raman-enhanced substrate fixing device with the probe.

Hence, the Raman-enhanced substrate fixing device of this embodiment is simple and compact in structure and convenient to carry, can quickly achieve the fixing of the Raman-enhanced substrate, the connection of the Raman spectrometer and the focusing of the Raman spectrometer on the Raman-enhanced substrate without precise and complicated focusing operation, can realize Raman detection by adjusting the position of Raman-enhanced substrate through the observation of naked eyes, is convenient to use, low in cost and high in efficiency, and is especially suitable for rapid detection on site.

The Raman-enhanced substrate fixing device of the present disclosure is used in conjunction with a Raman spectrometer to realize an efficient and high-precision on-site Raman detection process. Therefore, the present disclosure further provides a Raman-enhanced detecting system including a Raman spectrometer and the Raman-enhanced substrate fixing device of the present disclosure, the probe connecting portion being connected with the probe of the Raman spectrometer. The Raman spectrometer may be a portable or hand-held Raman spectrometer.

The foregoing description is merely a preferred embodiment of the present disclosure, and is not intended to limit the present disclosure. Any modification, equivalent substitution, improvement or the like made within the spirit and principle of the present disclosure shall fall within the protection scope of the present disclosure.

## Claims

1. A Raman-enhanced substrate fixing device, comprising a fixing base, wherein the fixing base is provided with a substrate receiving portion and a probe connecting portion, the substrate receiving portion for receiving a Raman-enhanced substrate, the probe connecting portion for connection with a probe of a Raman spectrometer, and the probe connecting portion and the substrate receiving portion are disposed such that light emitted by the probe is being irradiated onto the Raman-enhanced substrate.

2. The Raman-enhanced substrate fixing device according to claim 1, wherein the substrate receiving portion comprises a groove (11) that allows the Raman-enhanced substrate to be inserted into; and/or the probe connecting portion comprises a connecting hole (12) that allows the probe to be inserted into.

3. The Raman-enhanced substrate fixing device according to claim 2, wherein the substrate receiving portion comprises the groove (11), the probe connecting portion comprises the connecting hole (12), and the connecting hole (12) communicates with the groove (11).

4. The Raman-enhanced substrate fixing device according to claim 2, wherein the probe connecting portion further comprises a probe fastener that fastens the probe along a radial direction of the connecting hole (12).

5. The Raman-enhanced substrate fixing device according to claim 1, wherein the probe connecting portion and the substrate receiving portion are disposed such that a center of the probe is aligned with a center of the Raman-enhanced substrate.

6. The Raman-enhanced substrate fixing device according to claim 1, wherein the Raman-enhanced substrate fixing device further comprises a sealing member provided at the probe connecting portion.

7. The Raman-enhanced substrate fixing device according to claim 1, wherein the Raman-enhanced substrate fixing device further comprises an anti-slip member for preventing the Raman-enhanced substrate from slipping when entering the substrate receiving portion.

8. The Raman-enhanced substrate fixing device according to claim 7, wherein the anti-slip member is detachably connected to the fixing base.

9. The Raman-enhanced substrate fixing device according to claim 7, wherein the anti-slip member comprises an anti-slip rubber sheet (51).

10. The Raman-enhanced substrate fixing device according to any one of claims 1-9, wherein the fixing base comprises a first base (1) and a second base (2), the first base (1) is detachably connected with the second base (2), the substrate receiving portion is disposed on one side of at least one of the first base (1) and the second base (2) adjacent to the other of the first base (1) and the second base (2), and the probe connecting portion is disposed on the first base (1).

11. The Raman-enhanced substrate fixing device according to claim 10, wherein the substrate receiving portion is disposed on the first base (1).

12. The Raman-enhanced substrate fixing device according to claim 10, wherein the substrate receiving portion is disposed on one of the first base (1) and the second base (2), the anti-slip member of the Raman-enhanced substrate fixing device is disposed on the other of the first base (1) and the second base (2), and the anti-slip member is located between the first base (1) and the second base (2) and disposed opposite to the substrate receiving portion.

13. A Raman-enhanced detecting system, comprising a Raman spectrometer and the Raman-enhanced substrate fixing device according to any one of claims 1-12, the probe connecting portion being connected with the probe of the Raman spectrometer.
